(19) Europäisches Patentamt
European Patent Office
Office européen des brevets

(11) **EP 3 220 115 B1**

(12) **EUROPEAN PATENT SPECIFICATION**

(45) Date of publication and mention of the grant of the patent:
**23.03.2022   Bulletin 2022/12**

(21) Application number: **15790022.6**

(22) Date of filing: **05.02.2015**

(51) International Patent Classification (IPC):
**G01N 23/20** (2018.01)

(52) Cooperative Patent Classification (CPC):
**G01J 5/10; G01J 5/0088; G01J 5/046; G01J 5/80; G01K 11/00; G01N 23/20;** G01J 2005/103; G01N 2223/056; G01N 2223/63

(86) International application number:
**PCT/JP2015/053233**

(87) International publication number:
**WO 2016/075953 (19.05.2016 Gazette 2016/20)**

(54) **TEMPERATURE ESTIMATION METHOD FOR HIGH-TEMPERATURE MEMBER, METASTABLE TETRAGONAL PHASE CONTENT MEASUREMENT METHOD, AND DEGRADATION DETERMINATION METHOD**

VERFAHREN ZUR SCHÄTZUNG DER TEMPERATUR VON HOCHTEMPERATURELEMENTEN, METASTABILES TETRAGONALES PHASENINHALTSMESSVERFAHREN UND DEGRADATIONSBESTIMMUNGSVERFAHREN

PROCÉDÉ D'ESTIMATION DE TEMPÉRATURE POUR ÉLÉMENT HAUTE TEMPÉRATURE, PROCÉDÉ DE MESURE DE TENEUR EN PHASE TÉTRAGONALE MÉTASTABLE ET PROCÉDÉ DE DÉTERMINATION DE DÉGRADATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2014   JP 2014229619**

(43) Date of publication of application:
**20.09.2017   Bulletin 2017/38**

(73) Proprietor: **MITSUBISHI HEAVY INDUSTRIES, LTD.**
**Tokyo 108-8215 (JP)**

(72) Inventors:
• **WU Ruifen**
  **Tokyo 108-8215 (JP)**
• **TORIGOE Taiji**
  **Tokyo 108-8215 (JP)**
• **NAGANO Ichiro**
  **Tokyo 108-8215 (JP)**
• **OKAJIMA Yoshifumi**
  **Tokyo 108-8215 (JP)**
• **TSURU Yasuhiko**
  **Tokyo 108-8215 (JP)**

(74) Representative: **Henkel & Partner mbB Patentanwaltskanzlei, Rechtsanwaltskanzlei Maximiliansplatz 21 80333 München (DE)**

(56) References cited:
**JP-A- H07 280 798       JP-A- 2002 039 971**
**JP-A- 2003 004 549       JP-A- 2003 004 549**
**JP-A- 2003 074 376       JP-A- 2009 139 189**
**JP-A- 2012 137 242**

• **G WITZ ET AL: "Monitoring the phase evolution of Yttria Stabilized Zirconia in thermal barrier coatings using the Rietveld method", CERAMIC ENGINEERING AND SCIENCE PROCEEDINGS, vol. 28, 2008, pages 41-51, XP055509359, ISSN: 0196-6219**
• **TAYLOR R ET AL: "Microstructure, composition and property relationships of plasma-sprayed thermal barrier coatings", SURFACE AND COATINGS TECHNOLOGY, vol. 50, no. 2, 6 February 1992 (1992-02-06), pages 141-149, XP085003319, ISSN: 0257-8972, DOI: 10.1016/0257-8972(92)90055-F**

- **ZHAO L ET AL: "Effect of particle in-flight behavior on the composition of thermal barrier coatings", APPLIED SURFACE SCIENCE, vol. 286, 16 September 2013 (2013-09-16), pages 184-191, XP028765716, ISSN: 0169-4332, DOI: 10.1016/J.APSUSC.2013.09.045**
- **VAREZ ET AL: "Structural characterization of Ce(1-x)Zr(x)O2 (0<x<1) samples prepared at 1650°C by solid state reaction", JOURNAL OF THE EUROPEAN CERAMIC SOCIETY, vol. 27, no. 13-15, 19 March 2007 (2007-03-19), pages 3677-3682, XP022143611, ISSN: 0955-2219, DOI: 10.1016/J.JEURCERAMSOC.2007.02.014**
- **None**

**Description**

Technical Field

The present invention relates to a temperature estimation method of a high temperature member.

Background Art

In an industrial gas turbine, the demand for high efficiency and high temperature resistance is rapidly increasing, and the importance of a thermal barrier coating (TBC) provided to a high temperature member is also increasing. For example, in order to secure reliability of the TBC, a technique for estimating a surface temperature of the TBC exposed to high temperatures is desired. For example, PTL 1 discloses a temperature estimation method for estimating the amount of an M phase (monoclinic phase) included in a TBC using X-ray diffraction and calculating a surface temperature of the TBC based on the measured amount of monoclinic phase.

The TBC is configured by tough crystals called a T' phase (tetragonal-prime phase) in an initial stage. However, if the TBC is exposed at a certain high temperature for a long period of time, the T' phase of the TBC is decomposed into a T phase (tetragonal phase) and a C phase (cubic phase). Then, if the TBC is cooled, the T phase (tetragonal phase) is converted into an M phase (monoclinic phase) to cause volume expansion and reduce fracture toughness. The method disclosed in PTL 1 is a temperature estimation method based on the content of the monoclinic phase (M phase).

NPTL 1 is concerned with monitoring the phase evolution of yttria stabilized zirconia (YSZ) in thermal barrier coatings using X-ray diffraction in combination with the Rietveld method. In this context, it has been determined that, in the first stage of the ageing process of YSZ, the as-deposited tetragonal YSZ phase decomposes into a low yttria content tetragonal YSZ phase and a high yttria content YSZ phase, wherein the high yttria content YSZ phase, depending on the annealing temperature, is either cubic or tetragonal.

Citation List

[PTL 1] Japanese Patent No. 3519703
[NPTL 1] Witz et al., Advanced Ceramic Coatings and
Interfaces II: Ceramic Engineering and Science Proceedings 28 (2008), Issue 3, 41-51

Summary of Invention

Technical Problem

It is known that the reason why the T' phase is decomposed into the T phase and the C phase in such a crystalline structure change process is greatly related to temperature. The method disclosed in PTL 1 is based on the content of the monoclinic phase (M phase) generated after the temperature of the TBC is lowered, but in consideration of the content of the T' phase, it is considered that if it is possible to check the degree of decomposition of the T' phase included in the TBC, and to estimate the temperature based on the content of the T' phase, the surface temperature of the TBC can be estimated more precisely. However, such a temperature estimation method has not been proposed up to now.

The invention provides a temperature estimation method capable of solving the above-mentioned problems. The invention is defined by the claims.

Solution to Problem

The present invention thus relates to a temperature estimation method as defined in claim 1. The temperature estimation method includes the steps of: measuring a content of a tetragonal-prime phase included in a coating layer formed on a surface of a high temperature member by X-ray diffraction or Raman spectroscopy; and estimating a surface temperature of the high temperature member based on a temporal reduction of the estimated content of the tetragonal-prime phase. Preferred embodiments of the temperature estimation method of the invention are described in the subclaims.

Advantageous Effects of Invention

According to the above-described temperature estimation method, it is possible to estimate a surface temperature of a high temperature member.

Brief Description of Drawings

Fig. 1 is a diagram schematically illustrating a high temperature member

Fig. 2 is a diagram illustrating a change in a crystalline structure of a TBC of the high temperature member.

Fig. 3 is a first diagram illustrating derivation of a relational expression between the content of a T' phase, a heating time, and a TBC surface temperature in the first embodiment of the temperature estimation method of the invention.

Fig. 4 is a second diagram illustrating derivation of a relational expression between the content of a T' phase, a heating time, and a TBC surface temperature in the first embodiment of the temperature estimation method of the invention.

Fig. 5 is a third diagram illustrating derivation of a relational expression between the content of a T' phase, a heating time, and a TBC surface temperature in the first embodiment of the temperature estimation method of the invention.

Fig. 6 is a fourth diagram illustrating derivation of a relational expression between the content of a T' phase, a heating time, and a TBC surface temperature in the first embodiment of the temperature estimation method of the invention.

Fig. 7 is a flowchart illustrating a surface temperature estimation method of a TBC according to the first embodiment of the temperature estimation method of the invention.

Fig. 8 is a diagram illustrating the relationship between the position of a Raman peak and the content of a T' phase according to a second embodiment of the temperature estimation method of the invention.

Fig. 9 is a diagram illustrating the relationship between a full width at half maximum of a Raman peak and the content of a T' phase according to the second embodiment of the temperature estimation method of the invention.

Fig. 10 is a diagram illustrating the relationship between an intensity ratio of Raman peaks and the content of a T' phase according to the second embodiment of the temperature estimation method of the invention.

Fig. 11 is a flowchart illustrating a surface temperature estimation method of a TBC according to the second embodiment of the temperature estimation method of the invention.

Fig. 12 is a diagram illustrating the relationship between the position of a Raman peak and an LMP value according to a third embodiment of the temperature estimation method of the invention.

Fig. 13 is a diagram illustrating the relationship between a full width at half maximum of a Raman peak and an LMP value according to the third embodiment of the temperature estimation method of the invention.

Fig. 14 is a diagram illustrating the relationship between an intensity ratio of Raman peaks and an LMP value according to the third embodiment of the temperature estimation method of the invention.

Description of Embodiments

<First embodiment>

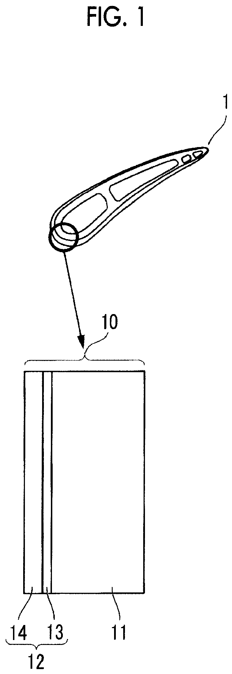

Hereinafter, a control system according to a first embodiment of the temperature estimation method of the invention will be described with reference to Figs. 1 to 6.

Fig. 1 is a diagram schematically illustrating a high temperature member according to a first embodiment of the temperature estimation method of the invention.

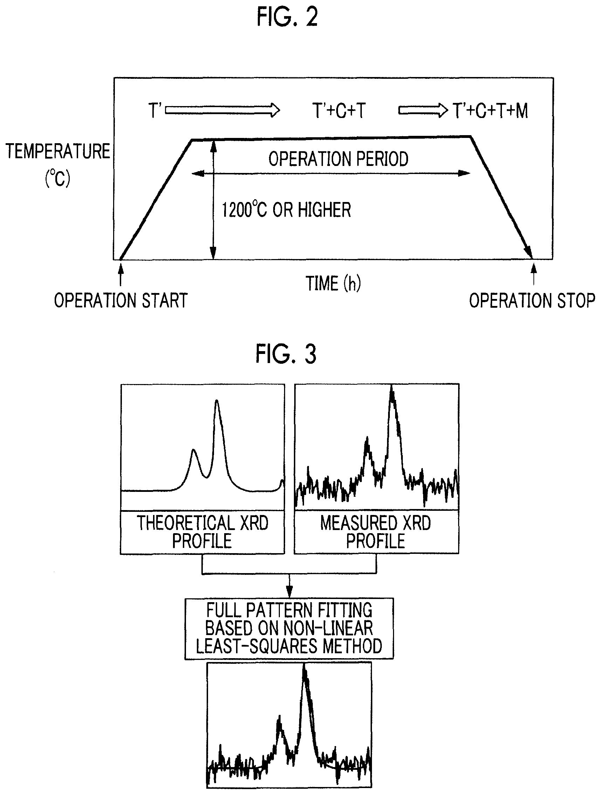

Fig. 2 is a diagram illustrating a change in a crystalline structure of a top coat layer of the high temperature member according to the first embodiment of the temperature estimation method of the invention.

A thermal barrier coating (TBC) is applied to a high temperature member exposed at a high temperature, such as a rotor-stator blade, a separation ring or a combustor of a gas turbine, by flame-spraying a flame coating material having a low thermal conductivity (for example, a ceramic-based material having a low thermal conductivity) on a surface of a heat-resistant alloy layer which is a base material in order to improve thermal insulation properties and durability. In Fig. 1, a turbine wing 1 is configured by a high temperature member 10. The high temperature member 10 is formed by a base material 11 made of a heat-resistant alloy, and a thermal barrier coating (TBC) layer 12. Further, the thermal barrier coating layer 12 is formed by a bond coat layer 13 made of metal for improvement of adhesion and oxidation resistance with respect to the base material 11, and a top coat layer 14 made of ceramics for improvement of the heat insulation properties. Fig. 2 shows a state where a crystalline structure of yttria stabilized zirconia (YSZ) of the top coat layer is changed over an operation time of a gas turbine when the YSZ is used as an example of the top coat layer.

The flame-sprayed YSZ includes tough crystals called a T' phase (tetragonal-prime phase) generated by being rapidly cooled, which occupy almost 100% of its content. Accordingly, almost the entirety of the YSZ when an operation of the gas turbine is started is occupied by the T' phase. The T' phase is relatively stabilized, but when exposed at a high temperature that exceeds 1200°C, the T' phase is gradually decomposed into a T phase (tetragonal phase) and a C phase (cubic phase). Accordingly, during the operation time of the gas turbine, a phenomenon where the T' phase is decomposed into the T phase and the C phase occurs, and thus, the T' phase, the T phase, and the C phase are mixedly present in the YSZ of the top coat layer 14 formed on the surface of the high temperature member 10. Further, the T phase is stabilized at the high temperature, but when cooled at a temperature of about 600°C or lower, the T phase is decomposed into an M phase (monoclinic phase) and a C phase. Accordingly, when the operation time of the gas turbine is terminated and the operation is stopped, the YSZ is gradually cooled, and the T phase is decomposed. Thus, the YSZ when the operation is stopped is in a state where the T' phase, the T phase, the M phase, and the C phase are mixedly present. It is known that a cooling speed at that time affects the decomposition of the T phase into the M phase and the C phase. Since the surface temperature of the top coat layer 14 of the turbine wing 1 is also related to a cooling method or the like of the turbine wing 1, for example, the surface temperature is very useful information in design of the gas turbine, and it is important to obtain as precise a temperature as possible. For example, when the surface temperature of the TBC is estimated by the content of the T phase or M phase, since the content is affected by the cooling speed of the turbine, it may be difficult to estimate a precise temperate at a high temperature. On the other hand, if it is possible to estimate the surface temperature of the top coat layer 14 when the gas turbine is operated based on the content (residue) of the T' phase, since the content of the T' phase is not affected by the cooling speed of the turbine or the like, for example, it is possible to more precisely estimate the surface temperature of the TBC. In this embodiment, a method for estimating the surface temperature of the top coat layer 14 in heating based on the content of the T' phase is provided. Hereinafter, the surface temperature of the top coat layer 14 is referred to as a TBC surface temperature.

Fig. 3 is a first diagram illustrating derivation of a relational expression between the content of a T' phase, a heating time, and a TBC surface temperature in the first embodiment of the temperature estimation method of the invention.

Fig. 3 is a diagram illustrating creation of a database for identifying the content of the T' phase included in the top coat layer 14. As described above, in this embodiment, the TBC surface temperature is estimated based on the content of the T' phase included in the top coat layer 14. Accordingly, it is important to precisely know the content of the T' phase of the TBC which is a measurement target. To this end, in this embodiment, a database is prepared using test pieces of the top coat layer 14 exposed to various temperatures for various amounts of time as samples. First, a heating process for heating the test pieces of the top coat layer 14 having the same composition as in an actual machine at a predetermined temperature for a predetermined time is performed. The predetermined temperature is 1100°C, 1200°C, 1300°C, 1400°C, or the like, for example. The predetermined time is 100 hours, 1000 hours, 10000 hours, or the like, for example. Then, measurement based on X-ray diffraction is performed with respect to each of the test pieces for which the heating process is performed under the various conditions to accumulate diffraction results [measured X-ray diffraction (XRD) profiles]. Here, it is preferable that a T' phase, a T phase, an M phase and a C phase which are included in the test piece can be identified by the measurement result based on the X-ray diffraction, but with respect to the T' phase, the T phase, and the C phase, lattice constants are close to each other and peaks of the measurement results are overlapped, and thus, it is difficult to identify the T' phase, the T phase, and the C phase. Accordingly, the T' phase, the T phase, and the C phase of the test piece are identified by Rietveld analysis.

In the Rietveld analysis, a measured XRD profile of each test piece and a theoretical XRD profile which is prepared in advance are analyzed by full pattern fitting or the like based on a non-linear least-squares method, for example, to thereby obtain a theoretical XRD profile for more precise fitting. The theoretical XRD profile is a theoretical value of diffraction result based on the X-ray diffraction generated by assuming various patterns of the contents of the T' phase, the T phase, and the C phase and performing a simulation or the like for each pattern. As a result of the Rietveld analysis, if the theoretical XRD profile for fitting is determined, the contents of the T' phase, the T phase, and the C phase of the test piece are determined as the contents of the T' phase, the T phase, and the C phase assumed with respect to the determined theoretical XRD profile.

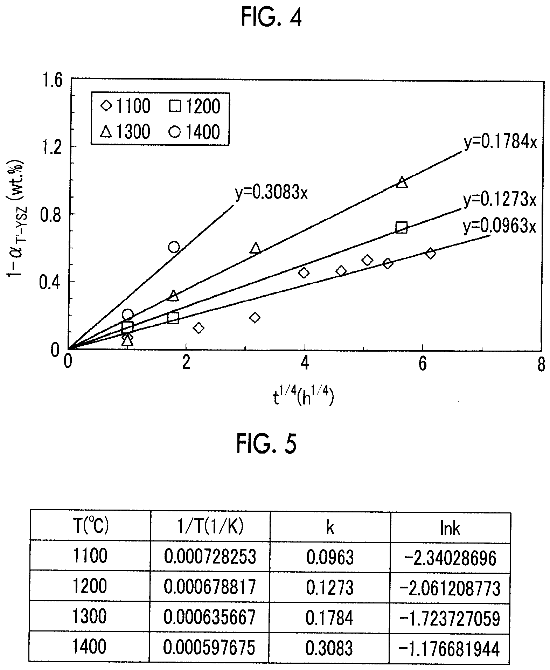

Next, a result obtained from the above experiment using an actual test piece will be described with reference to Figs. 4 to 6.

Fig. 4 is a second diagram illustrating derivation of a relational expression between the content of a T' phase, a heating time, and a TBC surface temperature according to the first embodiment of the temperature estimation method of the invention.

Fig. 5 is a third diagram illustrating derivation of a relational expression between the content of a T' phase, a heating time, and a TBC surface temperature according to the first embodiment of the temperature estimation method of the invention.

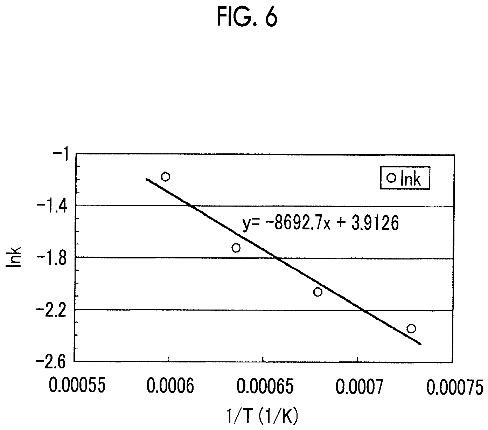

Fig. 6 is a fourth diagram illustrating derivation of a relational expression between the content of a T' phase, a heating time, and a TBC surface temperature according to the first embodiment of the temperature estimation method of the invention.

Fig. 4 shows a relationship between a decomposition amount of the T' phase and a heating time according to the first embodiment of the temperature estimation method of the invention.

In Fig. 4, a longitudinal axis ($1-\alpha_{T'-YSZ}$) represents the decomposition amount of the T' phase included in a test piece. A transverse axis represents a value of 1/4 powers of the time (t) when the test piece is heated. Further, rhombus points represent data on a test piece which is heated at a temperature of 1100°C, square points represent data on a test piece which is heated at a temperature of 1200°C, triangular points represent data on a test piece which is heated at a temperature of 1300°C, and circular points represent data on a test piece which is heated at a temperature of 1400°C. As shown in Fig. 4, at the respective temperatures of 1100°C to 1400°C, the decomposition amount (reduction amount) of the T' phase due to the heating and the value of 1/4 powers of the heating time (t) are in a linear relationship. At each temperature, when the slope of the straight line is k, the decomposition amount of the T' phase and the value of 1/4 powers of the heating time (t) may be expressed as follows.

$$f = 1 - \alpha_{T'-YSZ} = kt^{1/4} \qquad \cdots (1)$$

Fig. 5 is a diagram illustrating a table in which values of a heating temperature (T) and the slope k in the above-mentioned expression (1) are collected. In the table shown in Fig. 5, T, 1/T, k, and lnk are sequentially written from the left. Here, 1/T represents an inverse number of an absolute temperature (unit: K) of T. 1nk represents $\log_e k$. If 1/T and 1nk in the table shown in Fig. 5 are plotted (Arrhenius plotting), a result shown in Fig. 6 is obtained. As shown in Fig. 6, a linear relationship is obtained between lnk and 1/T. If Expression (1) is arranged by an Arrhenius's equation, the following Expression (2) is obtained.

$$f = 1 - \alpha_{T'-YSZ} = k_0 \cdot e^{\frac{-Q}{RT}} \cdot t^{1/4} \qquad \cdots (2)$$

Further, if a linear equation that satisfies the relationship between 1/T and lnk is calculated, the following Expression (3) is obtained from Fig. 6.

$$y = -8692.7x + 3.9126 \qquad \cdots (3)$$

Further, it is possible to calculate $k_0 = 50.0$ and $Q = 7.2 \times 10^5$ J/mol from a segment of $\ln k_0 = 3.9126$ and a slope of Q/R=-8692.7 (R is a gas constant: 8.31 J/(mol·k)). If these values are substituted in Expression (2), the following Expression (4) is obtained.

$$f = 1 - \alpha_{T'-YSZ} = 50 \cdot e^{\frac{-7.2 \times 10^5}{RT}} \cdot t^{1/4} \qquad \cdots (4)$$

Here, when considering estimation of the TBC surface temperature of the actual machine, since the heating time (that is, a gas turbine operation time) t and the gas constant R are already known, if the content of the T' phase ($\alpha_{T-YSZ}$) can be obtained, the heating temperature (T) can be calculated using Expression (4). Since the heating time (T) is a temperature of a furnace when a test piece of a top coat layer is inserted into the furnace, for example, the heating temperature (T) may be considered as the TBC surface temperature in the actual machine. That is, if the content of the T' phase included in the top coat layer 14 of the actual machine can be obtained, it is possible to obtain the TBC surface temperature using Expression (4).

The above processes correspond to processes in a preparation stage of this embodiment. That is, in the preparation stage, data in which the measured XRD profiles of the respective test pieces which are heated under the various conditions described with reference to Fig. 3 and the contents of the T' phase, the T phase, and the C phase (particularly, the content of the T' phase) with respect to each of the heated test pieces are associated with each other is obtained, and also, the relational expression (Expression (4)) between the content of the T' phase, the heating time, and the TBC surface temperature described with respect to Figs. 4 to 6 is obtained.

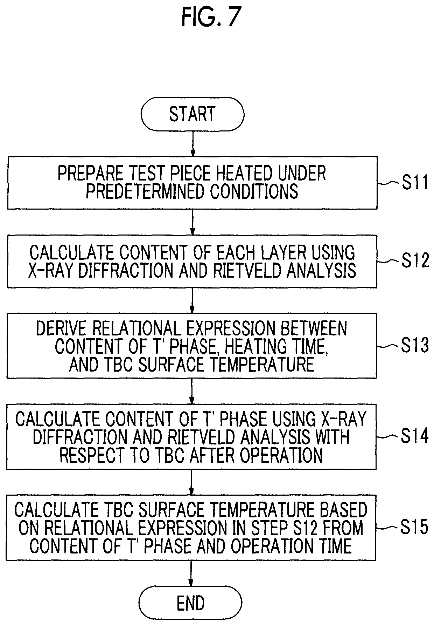

Next, a method for estimating a TBC surface temperature of the high temperature member 10 of an actual machine will be described with reference to Fig. 7.

Fig. 7 is a flowchart illustrating a TBC surface temperature estimation method according to the first embodiment of the temperature estimation method of the invention.

Steps S11 to S13 are processes in a preparation stage. Since these processes are the same as described above, description thereof will be briefly made. First, plural test pieces of the top coat layer 14 are prepared, and each test piece is heated at a predetermined temperature for a predetermined time to form a heated test piece (step S11). Then, measurement based on X-ray diffraction is performed with respect to each test piece, a T' phase, a T phase, a C phase, and an M phase are identified from diffraction patterns in a diffraction result, and the content of each phase is calculated. Here, since it is difficult to identify the T' phase, the T phase, and the C phase using the X-ray diffraction, the content of each of these phases is calculated by the Rietveld analysis using a theoretical diffraction result (theoretical XRD profile) with respect to various patterns of the contents of the T' phase, the T phase, and the C phase (step S12). Then, the relational expression between the content of the T' phase, the heating time, and the TBC surface temperature during heating is derived in the order described using Figs. 3 to 6 (step S13).

Then, estimation of the TBC surface temperature of the actual machine is performed. First, a TBC (top coat layer) which is a measurement target is obtained from a gas turbine after operation. Similar to step S12, X-ray diffraction and Rietveld analysis are performed with respect to the obtained measurement target TBC. In the Rietveld analysis, a target to be fitted for a measurement result based on the X-ray diffraction of the measurement target TBC may be a diffraction result based on the X-ray diffraction of the test piece analyzed in step S12 or may be a theoretical XRD profile as long as the contents of the T' phase, the T phase and the C phase are known. Thus, the content of the T' phase in the measurement target TBC is calculated (step S14).

Then, the content of the T' phase calculated in step S14 and the operation time of the gas turbine are substituted in the relational expression [for example, Expression (4)] between the content of the T' phase, the heating time, and the TBC surface temperature calculated in step S13. It is assumed that the operation time of the gas turbine is already known. The expression after substitution is solved for the TBC surface temperature (T) to calculate the TBC surface temperature (step S15). The calculated value is an estimated value of the surface temperature of the top coat layer 14 during operation of the gas turbine according to this embodiment.

According to this embodiment, it is possible to precisely calculate the content of the T' phase in the top coat layer 14 using the X-ray diffraction and the Rietveld analysis. Further, it is possible to calculate the relational expression [for example, Expression (4)] between the content of the T' phase, the heating time, and the TBC surface temperature from the fact that the T' phase is decomposed into a stable T phase due to a diffusion phenomenon under a high temperature environment, the fact that a decomposition speed at that time is changed according to temperature, the fact that a reduction amount of the T' phase at each temperature and 1/4 powers of the TBC heating time is in a linear relationship (Fig. 4), and Arrhenius's equation [$k=A\exp(-Q/RT)$, A: constant, Q: active energy, R: gas constant, T: absolute temperature]. Thus, it is possible to estimate the temperature of the TBC layer based on only the content of the T' phase. Accordingly, it is possible to estimate a high surface temperature with high accuracy without being influenced by the cooling speed or the like of the gas turbine, for example.

<Second embodiment>

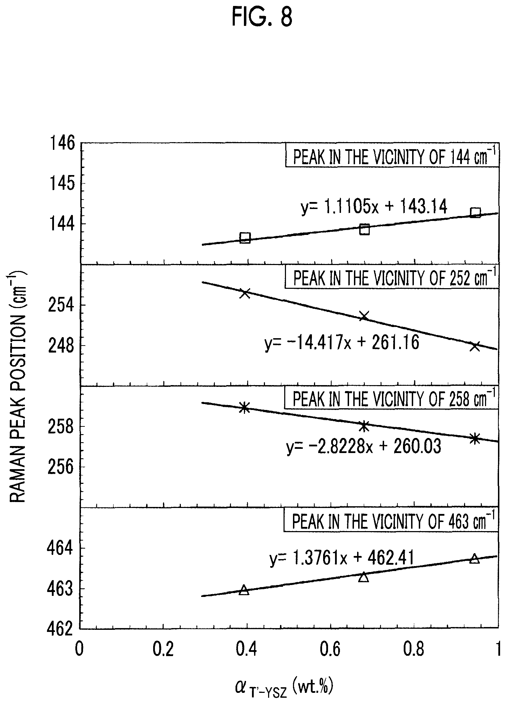

Hereinafter, a temperature estimation method according to a second embodiment of the temperature estimation method of the invention will be described with reference to Figs. 8 to 11.

In the second embodiment, when calculating the content of a T' phase of the TBC which is a measurement target, measurement based on Raman spectroscopy is performed. In this embodiment, first, similar to the first embodiment, X-ray diffraction and Rietveld analysis are performed with respect to test pieces having the same composition as in an actual machine, heated under various conditions, and the content of the T' phase in each test piece is calculated. Then, the measurement based on the Raman spectroscopy is performed with respect to each test piece for which the content of the T' phase is known. A measurement result based on the Raman spectroscopy and the content of the T' phase are recorded in association with each other.

Next, a result obtained by performing the measurement based on the Raman spectroscopy using an actual test piece will be described with reference to Figs. 8 to 11.

Fig. 8 is a diagram illustrating the relationship between the position of a Raman peak and the content of the T' phase in the second embodiment of the temperature estimation method of the invention.

In Fig. 8, a longitudinal axis represents the position of a Raman peak, and a transverse axis represents the content of the T' phase. In consideration of Raman peaks which are positioned in the vicinity of 144 cm-1, 252 cm-1, 258 cm-1, and 463 cm-1, if the relationship between the positions of these Raman peaks and the content of the T' phase is arranged, a linear relationship as shown in Fig. 8 is obtained.

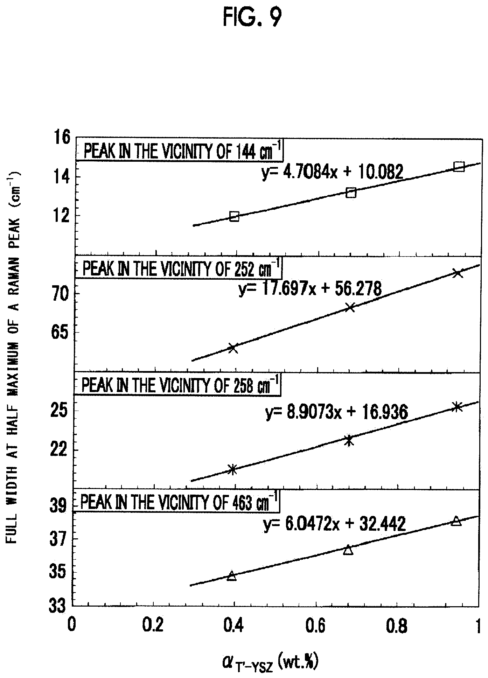

Fig. 9 is a diagram illustrating the relationship between a full width at half maximum of a Raman peak and the content of the T' phase in the second embodiment of the temperature estimation method of the invention.

In Fig. 9, a longitudinal axis represents a full width at half maximum of a Raman peak, and a transverse axis represents the content of the T' phase. Similar to Fig. 8, in consideration of Raman peaks which are positioned in the vicinity of 144 cm-1, 252 cm-1, 258 cm-1, and 463 cm-1, if the relationship between the full width at half maximums of these Raman peaks and the content of the T' phase is arranged, a linear relationship as shown in Fig. 9 is obtained.

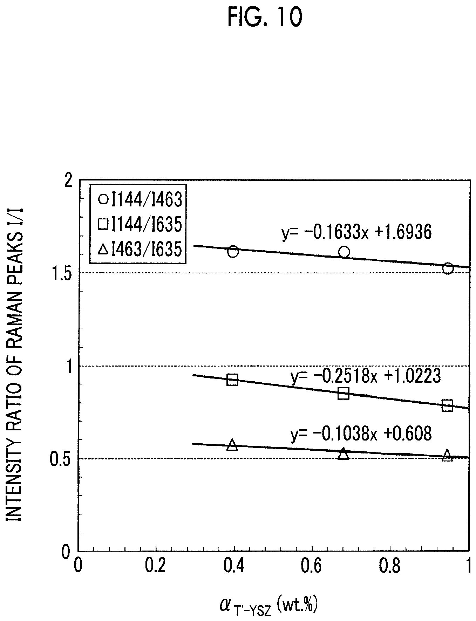

Fig. 10 is a diagram illustrating the relationship between the intensity ratio of Raman peaks and the content of the T' phase in the second embodiment of the temperature estimation method of the invention.

In Fig. 10, a longitudinal axis represents the intensity ratio of Raman peaks, and a transverse axis represents the content of the T' phase. In consideration of the ratio of a peak intensity of 144 $cm^{-1}$ and a peak intensity of 463 $cm^{-1}$ (the peak intensity of 144 $cm^{-1}$ ÷ the peak intensity of 463 $cm^{-1}$), the ratio of the peak intensity of 144 $cm^{-1}$ and a peak intensity of 635 $cm^{-1}$ (the peak intensity of 144 $cm^{-1}$÷ the peak intensity of 653 $cm^{-1}$), and the ratio of the peak intensity of 463 $cm^{-1}$ and the peak intensity of 635 $cm^{-1}$ (the peak intensity of 463 $cm^{-1}$ ÷ the peak intensity of 635 $cm^{-1}$) if the relationship between the peak intensity ratios and the content of the T' phase is arranged, a linear relationship as shown in Fig. 10 is obtained.

In this embodiment, measurement based on the Raman spectroscopy is performed with respect to test pieces for which the content of the T' phase is known by the X-ray diffraction and the Rietveld analysis, similar to the first embodiment. Feature amounts (peak position, full width at half maximum, and peak intensity ratio) of spectrums in measurement results are extracted, and a correlation between the extracted feature amounts and the content of the T' phase (for example, Figs. 8 to 10) is obtained. Further, similar to the first embodiment, the relational expression [Expression (4)] between the content of the T' phase, the heating time, and the TBC surface temperature is obtained.

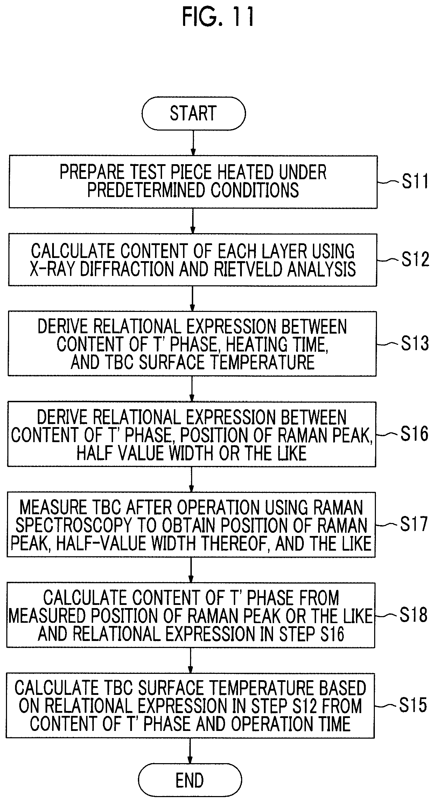

Next, a method for estimating a TBC surface temperature of a high temperature member of an actual machine according to this embodiment will be described with reference to Fig. 11.

Fig. 11 shows a flowchart of a TBC surface temperature estimation method according to the second embodiment of the temperature estimation method of the invention.

Steps S11 to S13 are processes in a preparation stage. These processes are the same as in the first embodiment. That is, test pieces are heated under various conditions to form heated test pieces (step S11), and the contents of the T phase, and the like are calculated by the X-ray diffraction and the Rietveld analysis with respect to each test piece (step S12). Then, the relational expression between the content of the T' phase, the heating time, and the TBC surface temperature during heating is derived (step S13).

In this embodiment, then, the Raman spectroscopy is performed with respect to each test piece. In consideration of a predetermined Raman peak in a measurement result obtained by the Raman spectroscopy, a correlation between each of the position of the Raman peak, a full width at half maximum of the Raman peak and an intensity ratio of the Raman peaks, and the content of the T' phase calculated in step S12 is arranged to calculate at least one of a relational expression between the position of the Raman peak and the content of the T' phase (for example, Fig. 8), a relational expression between the full width at half maximum of the Raman peak and the content of the T' phase (for example, Fig. 9), and a relational expression between the intensity ratio of the Raman peaks and the content of the T' phase (for example, Fig. 10) for each considered Raman peak (step S16). The above processes correspond to processes in a preparation stage in this embodiment.

Then, estimation of the TBC surface temperature of the high temperature member 10 of the actual machine is performed. First, a TBC (top coat layer) which is a measurement target is obtained from a gas turbine after operation. Measurement based on the Raman spectroscopy is performed with respect to the obtained measurement target TBC. Then, at least one of a Raman peak position, a Raman peak full width at half maximum, and a peak intensity ratio is obtained with respect to the measurement target TBC from the measurement result (step S17).

Then, the Raman peak position, the Raman peak full width at half maximum, and the peak intensity ratio calculated in step S17 are substituted in a corresponding relational expression calculated in step S16 to calculate the content of the T' phase included in the measurement target TBC (step S18). Then, the content of the T' phase calculated in step S18 and the operation time of the gas turbine which is already known are substituted in the relational expression [for example, Expression (4)] between the content of the T' phase, the heating time, and the TBC surface temperature calculated in step S13. The expression after substitution is solved for the TBC surface temperature (T) to calculate the TBC surface temperature (step S15). The calculated value is an estimated value of the TBC surface temperature during heating according to this embodiment.

In the first embodiment, the Rietveld analysis is performed to calculate the content of the T' phase included in the top coat layer 14 of the actual machine. Generally, the Rietveld analysis takes time and labor. On the other hand, in this embodiment, the content of the T' phase included in the top coat layer 14 of the actual machine is calculated by using the Raman spectroscopy capable of being relatively easily performed by any operator, instead of the X-ray diffraction and the Rietveld analysis. Accordingly, if the preparation stage is completed, it is possible to relatively easily obtain the content of the T' phase. Further, if the content of the T' phase is obtained, it is possible to calculate the TBC surface temperature, similar to the first embodiment. Accordingly, according to this embodiment, it is possible to more conveniently estimate the surface temperature of the TBC regardless of an individual's skill, in addition to the effects of the first embodiment.

The Raman spectroscopy is applicable without being limited by shapes of test pieces, and a portable Raman spectroscopy device may be provided. For example, Raman spectroscopy measurement may be performed with respect to a turbine wing in a state where the device is mounted on an actual machine.

<Third embodiment>

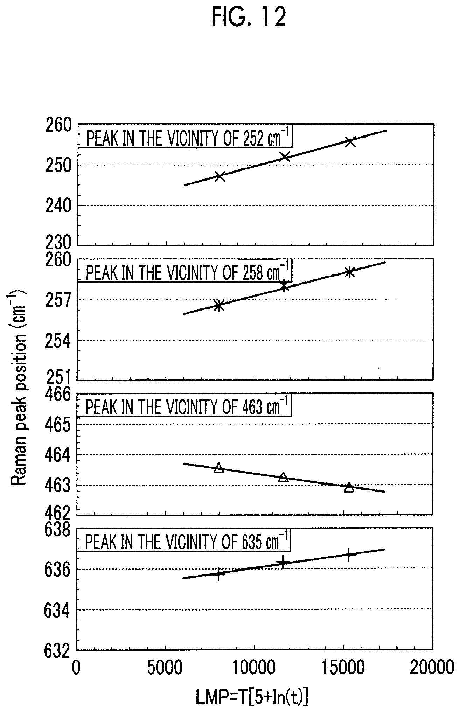

Further, the TBC surface temperature may be estimated by the following method. An estimation method of a surface temperature according to a third embodiment will be described with reference to Figs. 12 to 14.

First, heating is performed with respect to test pieces of the top coat layer 14 under various conditions, similar to the first embodiment. Then, measurement based on the Raman spectroscopy is performed with respect to the heated test pieces. Then, a Raman spectrum obtained from the measurement is fitted by a Gaussian function and a Lorentz function to obtain a Raman peak position, a full width at half maximum, and a peak intensity. Thereafter, each of the Raman peak position, the full width at half maximum, and the intensity, a heating time, and a heating temperature are arranged using a Larson-Miller parameter (LMP=T [5+ln(t)]).

Figs. 12 to 14 show examples of results obtained by arranging measurement values obtained based on the Raman spectroscopy using actual test pieces, using the LMP (T: heating temperature, t: heating time).

Fig. 12 is a diagram illustrating the relationship between a Raman position and an LMP value according to the third embodiment.

In Fig. 12, a longitudinal axis represents a Raman position, and a transverse axis represents an LMP value (=T [5+ln(t)]). In consideration of Raman peaks which are positioned in the vicinity of 252 cm$^{-1}$, 258 cm$^{-1}$, 463 cm$^{-1}$, and 635 cm$^{-1}$, if the relationship between these Raman peaks and the LMP value is arranged, a linear relationship as shown in Fig. 12 is obtained.

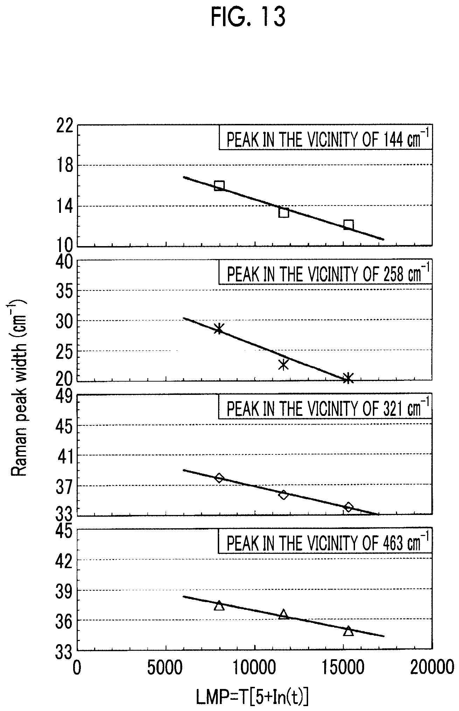

Fig. 13 is a diagram illustrating the relationship between a full width at half maximum of a Raman peak and an LMP value according to the third embodiment.

In Fig. 13, a longitudinal axis represents a full width at half maximum of a Raman peak, and a transverse axis represents an LMP value. In consideration of Raman peaks which are positioned in the vicinity of 144 cm$^{-1}$, 258 cm$^{-1}$, 321 cm$^{-1}$, and 463 cm$^{-1}$, if the relationship between these Raman peaks and the LMP value is arranged, a linear relationship as shown in Fig. 13 is obtained.

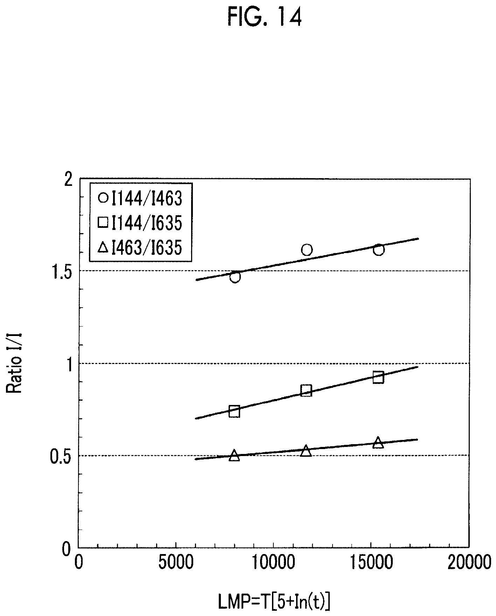

Fig. 14 is a diagram illustrating the relationship between the intensity ratio of Raman peaks and an LMP value according to the third embodiment.

In Fig. 14, a longitudinal axis represents the intensity ratio of Raman peaks, and a transverse axis represents an LMP value. In consideration of the ratio of a peak intensity of 144 cm$^{-1}$ and a peak intensity of 463 cm$^{-1}$, the ratio of the peak intensity of 144 cm$^{-1}$ and a peak intensity of 635 cm$^{-1}$, and the peak intensity of 463 cm$^{-1}$ and the peak intensity of 635 cm$^{-1}$, if the relationship between the peak intensity ratios and the LMP value is arranged, a linear relationship as shown in Fig. 14 is obtained.

The relationship between the results obtained by measuring based on the Raman spectroscopy using the test pieces and the LMP value is recorded. The above processes correspond to processes in a preparation stage.

Then, a TBC surface temperature of an actual machine is estimated. First, similar to the first and second embodiments, a TBC which is a measurement target is obtained, and measurement based on the Raman spectroscopy is performed with respect to the measurement target TBC. Then, at least one of a Raman peak position, a Raman peak full width at half maximum, and a peak intensity ratio with respect to the measurement target TBC is obtained from the measurement result. Then, in a case where the Raman peak position is obtained, the LMP value of the measurement target TBC is obtained from the relationship illustrated in Fig. 12. Similarly, in a case where the Raman peak full width at half maximum is obtained, the LMP value of the measurement target TBC is obtained from the relationship illustrated in Fig. 13. In a case where the peak intensity is obtained, the LMP value of the measurement target TBC is obtained from the relationship illustrated in Fig. 14. Then, the operation time (t) of the gas turbine is substituted in the following expression.

$$T×[5+\ln(t)]=\text{LMP value obtained based on Figs. 12 to 14} \quad ...(5)$$

By solving Expression (5) for T, it is possible to calculate a TBC surface temperature according to the third embodiment.

However, it is known that the content of the T' phase is in high correlation with durability against the heat cycle (R. A. Miller et al., American Ceramic Society Bulletin, 62(12), 1355, 1983). By using this characteristic and the measurement method of the content of the T' phase according to each of the first to third embodiments, it is possible to determine deterioration of the high temperature member 10.

For example, a test piece for a heat-resistant test in which the same TBC as in an actual machine is formed on the same base material as in the actual machine is prepared, and the same thermal load as in a turbine member of the actual machine is applied to the test piece, to thereby check a deterioration degree of the test piece. For example, Japanese Patent No. 4388466 discloses a method for repeatedly applying a predetermined thermal load to a test piece and evaluating the number of times of repetition at the time when peeling of TBC occurs as a heat cycle lifetime, by a laser type heat cycle tester that heats a TBC side of the test piece using laser light and cools a base material on a rear side of the test piece (on a side opposite to the side where the TBC is provided) using a cooling gas. For example, the thermal load is repeatedly applied to the test piece for the heat-resistant test until the peeling of the TBC occurs. Here, similar to the first embodiment, for each predetermined number of times of repetition, the X-ray diffraction and the Rietveld analysis are performed with respect to the test piece to calculate the content of the T' phase included in the TBC of the test piece. Alternatively, similar to the second embodiment, using the measurement result of the Raman spectroscopy for the TBC of the test piece and the relational expression obtained in step S16, the content of the T' phase included in the TBC of the test piece is calculated. Further, a relationship between the number of times of repetition and the deterioration degree is defined from the number of times of repetition when the peeling of the TBC occurs (for example, if the TBC is peeled by 100 times of repetition, the deterioration degree may be set to 50% in the case of 50 times of repetition), and then, a correspondence relationship between the content of the T' phase and the deterioration degree is recorded.

Then, a TBC which is a measurement target is obtained from the actual machine, and the content of the T' phase of the measurement target TBC is calculated using the same method as in the first embodiment or the second embodiment. Then, it is possible to determine a deterioration degree of a turbine member of the actual machine based on the correspondence relationship between the content of the T' phase and the deterioration degree which is prepared in advance using the test piece for the heat-resistant test.

In the first to third embodiments, an example in which the YSZ is used as the material of the top coat layer 14 is shown, but the invention is not limited thereto. In addition, stabilized zirconia (for example, YbSZ, or the like) that includes one type or two or more types of oxides (alkaline such as $MgO$ or $CaO$, light rare earth such as $SC_2O_3$ or $Y_2O_3$, or heavy rare earth such as $La_2O_3$, $Ce_2O_3$, $Pr_2O_3$, $Nd_2O_3$, $Pm_2O_3$, $Sm_2O_3$, $EU_2O_3$, $Gd_2O_3$, $Tb_2O_3$, $Dy_2O_3$, $Ho_2O_3$, $Er_2O_3$, $Tm_2O_3$, $Yb_2O_3$, or $LU_2O_3$) capable of partially stabilizing zirconia ($ZrO_2$) may be used.

In addition, the components in the above-described embodiments may be appropriately replaced with known components in a range defined by the claims. Further, a technical scope of the invention does not only include the above-described embodiments, but may also include various modifications in a range defined by the claims. In the above description, the test piece of the top coat layer 14 is an example of a test member, and the measurement target TBC is an example of a measurement member.

Industrial Applicability

According to the above-described temperature estimation method, it is possible to estimate a surface temperature of a high temperature member.

Reference Signs List

1    Turbine wing
10   High temperature member
11   Base material
12   Thermal barrier coating layer
13   Bond coat layer
14   Top coat layer

**Claims**

1. A temperature estimation method, comprising the step of measuring a content of a tetragonal-prime (T') phase included in a coating layer (12) formed on a surface of a high temperature member (10) by X-ray diffraction or Raman spectroscopy; and
   **characterized in that** the method further comprises the step of estimating a surface temperature of the high temperature member (10) based on a temporal reduction of the estimated content of the tetragonal-prime (T') phase.

2. The temperature estimation method according to claim 1, further comprising the steps of:

performing Rietveld analysis with respect to each of diffraction results obtained by performing measurement based on the X-ray diffraction with respect to a plurality of test members of the coating layer (12) heated at each of a plurality of predetermined heating temperatures for a plurality of predetermined heating times and a diffraction result obtained by performing measurement based on the X-ray diffraction with respect to a member for which contents of a tetragonal-prime (T') phase, a tetragonal (T) phase, and a cubic (C) phase are known in advance to calculate the content of the tetragonal-prime (T') phase included in each of the plurality of test members, accumulating data on a heating temperature, a heating time, and the content of the tetragonal-prime (T') phase corresponding to each test member, and calculating a relational expression between the heating time, the heating temperature, and the content of the tetragonal-prime (T') phase for the test member;

performing, when the heating time in the heating is known with respect to a measurement member of the coating layer (12) heated at a heating temperature of a predetermined temperature or higher, the Rietveld analysis with respect to the diffraction results based on the X-ray diffraction with respect to the measurement members and the diffraction result based on the X-ray diffraction with respect to the member for which the contents of the tetragonal-prime (T') phase, the tetragonal (T) phase, and the cubic (C) phase are known in advance to calculate the content of the tetragonal-prime (T') phase included in each measurement member; and

calculating the heating temperature of the measurement member based on the heating time of the measurement member, the calculated content of the tetragonal-prime (T') phase included in the measurement member, and the relational expression.

3. The temperature estimation method according to claim 1, further comprising the steps of:

performing Rietveld analysis with respect to each of diffraction results obtained by performing measurement based on the X-ray diffraction with respect to a plurality of test members of the coating layer (12) heated at each of a plurality of predetermined heating temperatures for a plurality of predetermined heating times and a diffraction result obtained by performing measurement based on the X-ray diffraction with respect to a member for which contents of a tetragonal-prime (T') phase, a tetragonal (T) phase, and a cubic (C) phase are known in advance to calculate the content of the tetragonal-prime (T') phase included in each of the plurality of test members, accumulating data on a heating temperature, a heating time, and the content of the tetragonal-prime (T') phase corresponding to each test member, and calculating a relational expression between the heating time, the heating temperature, and the content of the tetragonal-prime (T') phase for the test member;

calculating a correlation between a feature amount of a spectrum which is a result obtained by measuring the plurality of test members using the Raman spectroscopy and the calculated content of the tetragonal-prime (T') phase included in each test member;

calculating, when the heating time in the heating is known with respect to the measurement member of the coating layer (12) heated at a heating temperature of a predetermined temperature or higher, the content of the tetragonal-prime (T') phase included in the measurement member based on the feature amount of the spectrum obtained by measuring the measurement member using the Raman spectroscopy and the correlation; and

calculating the heating temperature of the measurement member based on the heating time of the measurement member, the calculated content of the tetragonal-prime (T') phase included in the measurement member, and the relational expression.

4. The temperature estimation method according to claim 2 or 3, wherein the relational expression is based on a linear relationship between a decomposition amount of the tetragonal-prime (T') phase and 1/4 powers of the heating time.

**Patentansprüche**

1. Temperaturschätzverfahren, umfassend den Schritt des Messens des Gehalts an tetragonal-primärer (T') Phase, welche in einer auf einer Oberfläche eines Hochtemperaturelements (10) gebildeten Überzugsschicht (12) enthalten ist, mithilfe von Röntgenbeugung oder Raman-Spektroskopie; und

**dadurch gekennzeichnet, dass** das Verfahren weiterhin den Schritt des Schätzens einer Oberflächentemperatur des Hochtemperaturelements (10) basierend auf einer zeitlichen Verringerung des geschätzten Gehalts an tetragonal-primärer (T') Phase umfasst.

2. Temperaturschätzverfahren gemäß Anspruch 1, weiterhin umfassend die Schritte:

Durchführen einer Rietveld-Analyse für jedes der Beugungsergebnisse, welche beim Durchführen einer auf Röntgenbeugung basierenden Messung für eine Vielzahl von Testelementen der Überzugsschicht (12) erhalten werden, die jeweils für eine Vielzahl von vorbestimmten Erwärmungszeiten auf eine Vielzahl von vorbestimmten Erwärmungstemperaturen erwärmt worden sind, und für ein Beugungsergebnis, welches beim Durchführen einer auf Röntgenbeugung basierenden Messung für ein Element erhalten wird, für das der Gehalt an tetragonal-primärer (T') Phase, tetragonaler (T) Phase und kubischer (C) Phase vorab bekannt ist, um den Gehalt an tetragonal-primärer (T') Phase zu berechnen, welche in jedem der Vielzahl von Testelementen enthalten ist, Sammeln von Daten über eine Erwärmungstemperatur, eine Erwärmungszeit, und den Gehalt an tetragonal-primärer (T') Phase, welche jedem der Testelemente entspricht, und Berechnen eines Vergleichsausdrucks zwischen der Erwärmungszeit, der Erwärmungstemperatur, und dem Gehalt an tetragonal-primärer (T') Phase für das Testelement;

Durchführen, wenn die Erwärmungszeit der Erwärmung für ein Messelement der Überzugsschicht (12) bekannt ist, welches auf eine Erwärmungstemperatur mit vorbestimmter Temperatur oder höher erwärmt worden ist, der Rietveld-Analyse für die auf Röntgenbeugung basierenden Beugungsergebnisse der Messelemente und für das auf Röntgenbeugung basierende Beugungsergebnis des Elements, für das der Gehalt an tetragonal-primärer (T') Phase, tetragonaler (T) Phase und kubischer (C) Phase vorab bekannt ist, um den Gehalt an tetragonal-primärer (T') Phase zu berechnen, welche in jedem der Messelemente enthalten ist; und

Berechnen der Erwärmungstemperatur des Messelements basierend auf der Erwärmungszeit des Messelements, des berechneten Gehalts an tetragonal-primärer (T') Phase, welche in dem Messelement enthalten ist, und des Vergleichsausdrucks.

3. Temperaturschätzverfahren gemäß Anspruch 1, weiterhin umfassend die Schritte:

Durchführen einer Rietveld-Analyse für jedes der Beugungsergebnisse, welche beim Durchführen einer auf Röntgenbeugung basierenden Messung für eine Vielzahl von Testelementen der Überzugsschicht (12) erhalten werden, die jeweils für eine Vielzahl von vorbestimmten Erwärmungszeiten auf eine Vielzahl von vorbestimmten Erwärmungstemperaturen erwärmt worden sind, und für ein Beugungsergebnis, welches beim Durchführen einer auf Röntgenbeugung basierenden Messung für ein Element erhalten wird, für das der Gehalt an tetragonal-primärer (T') Phase, tetragonaler (T) Phase und kubischer (C) Phase vorab bekannt ist, um den Gehalt an tetragonal-primärer (T') Phase zu berechnen, welche in jedem der Vielzahl von Testelementen enthalten ist, Sammeln von Daten über eine Erwärmungstemperatur, eine Erwärmungszeit, und den Gehalt an tetragonal-primärer (T') Phase, welche jedem der Testelemente entspricht, und Berechnen eines Vergleichsausdrucks zwischen der Erwärmungszeit, der Erwärmungstemperatur, und dem Gehalt an tetragonal-primärer (T') Phase für das Testelement;

Berechnen einer Korrelation zwischen einer Merkmalsmenge eines Spektrums, bei welcher es sich um ein durch Vermessen der Vielzahl von Testelementen unter Verwendung von Raman-Spektroskopie erhaltenes Ergebnis handelt, und dem berechneten Gehalt an tetragonal-primärer (T') Phase, welche in jedem der Testelemente enthalten ist;

Berechnen, wenn die Erwärmungszeit der Erwärmung für das Messelement der Überzugsschicht (12) bekannt ist, welches auf eine Erwärmungstemperatur mit vorbestimmter Temperatur oder höher erwärmt worden ist, des Gehalts an tetragonal-primärer (T') Phase, welche in dem Messelement enthalten ist, basierend auf der durch Vermessen des Messelements unter Verwendung von Raman-Spektroskopie erhaltenen Merkmalsmenge des Spektrums und der Korrelation; und

Berechnen der Erwärmungstemperatur des Messelements basierend auf der Erwärmungszeit des Messelements, des berechneten Gehalts an tetragonal-primärer (T') Phase, welche in dem Messelement enthalten ist, und des Vergleichsausdrucks.

4. Temperaturschätzverfahren gemäß Anspruch 2 oder 3, wobei der Vergleichsausdruck auf einer linearen Beziehung zwischen einer Zersetzungsmenge der tetragonal-primären (T') Phase und 1/4 Potenzen der Erwärmungszeit basiert.

**Revendications**

1. Procédé d'estimation de température, comprenant l'étape de mesure d'une teneur d'une phase tétragonale prime (T') incluse dans une couche de revêtement (12) formée sur une surface d'un élément à haute température (10) par diffraction des rayons X ou spectroscopie Raman ; et

**caractérisé en ce que** le procédé comprend en outre l'étape d'estimation d'une température de surface de l'élément à haute température (10) sur la base d'une réduction temporelle de la teneur estimée de la phase tétragonale prime (T').

**2.** Procédé d'estimation de température selon la revendication 1, comprenant en outre les étapes suivantes :

la réalisation d'une analyse de Rietveld par rapport à chacun des résultats de diffraction obtenus en réalisant une mesure basée sur la diffraction des rayons X par rapport à une pluralité d'éléments de test de la couche de revêtement (12) chauffée à chacune d'une pluralité de températures de chauffage prédéterminées pendant une pluralité de temps de chauffage prédéterminés et un résultat de diffraction obtenu en réalisant une mesure basée sur la diffraction des rayons X par rapport à un élément pour lequel les teneurs d'une phase tétragonale prime (T'), d'une phase tétragonale (T) et d'une phase cubique (C) sont connues à l'avance pour calculer la teneur de la phase tétragonale prime (T') incluse dans chacun de la pluralité d'éléments de test, l'accumulation de données sur une température de chauffage, un temps de chauffage et la teneur de la phase tétragonale prime (T') correspondant à chaque élément de test, et le calcul d'une expression relationnelle entre le temps de chauffage, la température de chauffage et la teneur de la phase tétragonale prime (T') pour l'élément de test ;

la réalisation, lorsque le temps de chauffage dans le chauffage est connu par rapport à un élément de mesure de la couche de revêtement (12) chauffée à une température de chauffage d'une température prédéterminée ou supérieure, de l'analyse de Rietveld par rapport aux résultats de diffraction basés sur la diffraction des rayons X par rapport aux éléments de mesure et au résultat de diffraction basé sur la diffraction des rayons X par rapport à l'élément pour lequel les teneurs de la phase tétragonale prime (T'), la phase tétragonale (T) et la phase cubique (C) sont connues à l'avance pour calculer la teneur de la phase tétragonale prime (T') incluse dans chaque élément de mesure ; et

le calcul de la température de chauffage de l'élément de mesure sur la base du temps de chauffage de l'élément de mesure, de la teneur calculée de la phase tétragonale prime (T') incluse dans l'élément de mesure et de l'expression relationnelle.

**3.** Procédé d'estimation de température selon la revendication 1, comprenant en outre les étapes suivantes :

la réalisation d'une analyse de Rietveld par rapport à chacun des résultats de diffraction obtenus en réalisant une mesure basée sur la diffraction des rayons X par rapport à une pluralité d'éléments de test de la couche de revêtement (12) chauffée à chacune d'une pluralité de températures de chauffage prédéterminées pendant une pluralité de temps de chauffage prédéterminés et un résultat de diffraction obtenu en réalisant une mesure basée sur la diffraction des rayons X par rapport à un élément pour lequel les teneurs d'une phase tétragonale prime (T'), d'une phase tétragonale (T) et d'une phase cubique (C) sont connus à l'avance pour calculer la teneur de la phase tétragonale prime (T') incluse dans chacun de la pluralité d'éléments de test, l'accumulation de données sur une température de chauffage, un temps de chauffage et la teneur de la phase tétragonale prime (T') correspondant à chaque élément de test, et le calcul d'une expression relationnelle entre le temps de chauffage, la température de chauffage et la teneur de la phase tétragonale prime (T') pour l'élément de test ;

le calcul d'une corrélation entre une quantité caractéristique d'un spectre qui est un résultat obtenu en mesurant la pluralité d'éléments de test en utilisant la spectroscopie Raman et la teneur calculée de la phase tétragonale prime (T') incluse dans chaque élément de test ;

le calcul, lorsque le temps de chauffage dans le chauffage est connu par rapport à l'élément de mesure de la couche de revêtement (12) chauffée à une température de chauffage d'une température prédéterminée ou supérieure, de la teneur de la phase tétragonale prime (T') incluse dans l'élément de mesure sur la base de la quantité caractéristique du spectre obtenu en mesurant l'élément de mesure en utilisant la spectroscopie Raman et de la corrélation ; et

le calcul de la température de chauffage de l'élément de mesure sur la base du temps de chauffage de l'élément de mesure, de la teneur calculée de la phase tétragonale prime (T') incluse dans l'élément de mesure et de l'expression relationnelle.

**4.** Procédé d'estimation de température selon la revendication 2 ou 3, dans lequel l'expression relationnelle est basée sur une relation linéaire entre une quantité de décomposition de la phase tétragonale prime (T') et 1/4 des puissances du temps de chauffage.

FIG. 1

## FIG. 2

## FIG. 3

FIG. 4

FIG. 5

| T(°C) | 1/T(1/K) | k | lnk |
|---|---|---|---|
| 1100 | 0.000728253 | 0.0963 | −2.34028696 |
| 1200 | 0.000678817 | 0.1273 | −2.061208773 |
| 1300 | 0.000635667 | 0.1784 | −1.723727059 |
| 1400 | 0.000597675 | 0.3083 | −1.176681944 |

## FIG. 6

$y= -8692.7x + 3.9126$

# FIG. 7

```
                    ┌─────────────┐
                    │    START    │
                    └──────┬──────┘
                           ▼
         ┌──────────────────────────────────────┐
         │   PREPARE TEST PIECE HEATED UNDER     │── S11
         │       PREDETERMINED CONDITIONS        │
         └──────────────────┬───────────────────┘
                            ▼
         ┌──────────────────────────────────────┐
         │   CALCULATE CONTENT OF EACH LAYER USING│── S12
         │   X-RAY DIFFRACTION AND RIETVELD ANALYSIS│
         └──────────────────┬───────────────────┘
                            ▼
         ┌──────────────────────────────────────┐
         │   DERIVE RELATIONAL EXPRESSION BETWEEN │── S13
         │   CONTENT OF T' PHASE, HEATING TIME,   │
         │     AND TBC SURFACE TEMPERATURE        │
         └──────────────────┬───────────────────┘
                            ▼
         ┌──────────────────────────────────────┐
         │  CALCULATE CONTENT OF T' PHASE USING X-RAY│── S14
         │  DIFFRACTION AND RIETVELD ANALYSIS WITH │
         │      RESPECT TO TBC AFTER OPERATION     │
         └──────────────────┬───────────────────┘
                            ▼
         ┌──────────────────────────────────────┐
         │ CALCULATE TBC SURFACE TEMPERATURE BASED│── S15
         │ ON RELATIONAL EXPRESSION IN STEP S12 FROM│
         │   CONTENT OF T' PHASE AND OPERATION TIME │
         └──────────────────┬───────────────────┘
                            ▼
                    ┌─────────────┐
                    │     END     │
                    └─────────────┘
```

FIG. 8

## FIG. 9

FIG. 10

# FIG. 11

```
              ┌──────────┐
              │  START   │
              └────┬─────┘
                   │
  ┌────────────────▼────────────────┐
  │  PREPARE TEST PIECE HEATED UNDER │──S11
  │     PREDETERMINED CONDITIONS     │
  └────────────────┬────────────────┘
                   │
  ┌────────────────▼────────────────┐
  │  CALCULATE CONTENT OF EACH LAYER USING │──S12
  │  X-RAY DIFFRACTION AND RIETVELD ANALYSIS │
  └────────────────┬────────────────┘
                   │
  ┌────────────────▼────────────────┐
  │ DERIVE RELATIONAL EXPRESSION BETWEEN │
  │  CONTENT OF T' PHASE, HEATING TIME,  │──S13
  │    AND TBC SURFACE TEMPERATURE       │
  └────────────────┬────────────────┘
                   │
  ┌────────────────▼────────────────┐
  │  DERIVE RELATIONAL EXPRESSION BETWEEN │
  │ CONTENT OF T' PHASE, POSITION OF RAMAN PEAK, │──S16
  │     HALF VALUE WIDTH OR THE LIKE     │
  └────────────────┬────────────────┘
                   │
  ┌────────────────▼────────────────┐
  │  MEASURE TBC AFTER OPERATION USING RAMAN │
  │ SPECTROSCOPY TO OBTAIN POSITION OF RAMAN │──S17
  │ PEAK, HALF-VALUE WIDTH THEREOF, AND THE LIKE │
  └────────────────┬────────────────┘
                   │
  ┌────────────────▼────────────────┐
  │   CALCULATE CONTENT OF T' PHASE FROM │
  │ MEASURED POSITION OF RAMAN PEAK OR THE LIKE │──S18
  │  AND RELATIONAL EXPRESSION IN STEP S16 │
  └────────────────┬────────────────┘
                   │
  ┌────────────────▼────────────────┐
  │ CALCULATE TBC SURFACE TEMPERATURE BASED │
  │ ON RELATIONAL EXPRESSION IN STEP S12 FROM │──S15
  │  CONTENT OF T' PHASE AND OPERATION TIME │
  └────────────────┬────────────────┘
                   │
              ┌────▼─────┐
              │   END    │
              └──────────┘
```

FIG. 12

## FIG. 13

## FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3519703 B

- JP 4388466 B

**Non-patent literature cited in the description**

- *Interfaces II: Ceramic Engineering and Science Proceedings,* 2008, vol. 28, 41-51

- **R. A. MILLER et al.** *American Ceramic Society Bulletin,* 1983, vol. 62 (12), 1355